**Europäisches Patentamt**

**European Patent Office**

**Office européen des brevets**

(11) Veröffentlichungsnummer : **0 324 498 B1**

(12) **EUROPÄISCHE PATENTSCHRIFT**

(45) Veröffentlichungstag der Patentschrift :
**06.05.92 Patentblatt 92/19**

(51) Int. Cl.⁵ : **F16H 53/02**, F01L 1/04,
B21D 53/84

(21) Anmeldenummer : **89100547.2**

(22) Anmeldetag : **13.01.89**

(54) **Mehrschichtenantriebswelle.**

(30) Priorität : **14.01.88 DE 3800913**

(43) Veröffentlichungstag der Anmeldung :
**19.07.89 Patentblatt 89/29**

(45) Bekanntmachung des Hinweises auf die
Patenterteilung :
**06.05.92 Patentblatt 92/19**

(84) Benannte Vertragsstaaten :
**BE CH DE ES FR GB IT LI NL SE**

(56) Entgegenhaltungen :
**DE-A- 3 247 636**
**GB-A- 2 164 420**
**JP-A-58 132 325**

(73) Patentinhaber : **Emitec Gesellschaft für**
**Emissionstechnologie mbH**
**Hauptstrasse 150**
**W-5204 Lohmar 1 (DE)**

(72) Erfinder : **Maus, Wolfgang**
**Gut Horst**
**W-5060 Bergisch Gladbach 1 (DE)**
Erfinder : **Swars, Helmut**
**Riedweg 11**
**W-5060 Bergisch Gladbach 1 (DE)**

(74) Vertreter : **Neumann, Ernst Dieter, Dipl.-Ing. et**
**al**
**HARWARDT NEUMANN PATENTANWÄLTE**
**Scheerengasse 2 Postfach 1455**
**W-5200 Siegburg (DE)**

## Beschreibung

Die vorliegende Erfindung betrifft eine Antriebswelle in Form einer Hohlwelle mit auf diese aufgeschobenen und darauf befestigten Antriebselementen die aus mindestens zwei konzentrischen Schichten besteht.

In der EP-A-0 213 529 wird ein Verfahren zum Befestigen von Antriebselememten, wie Nocken, Zahnrädern oder Lagerschalen auf einer Hohlwelle vorgeschlagen, bei der diese aus einem handelsüblichen Rohr besteht, auf die die Elemente aufgeschoben werden, worauf sie durch Aufweiten der darunterliegenden Abschnitte des Rohres auf demselben befestigt werden, wobei der Werkstoff des Rohres selbst plastisch, derjenige der Antriebselemente jedoch nur elastisch verformt wird, so daß durch die Rückfederung des letzteren ein fester Sitz auf der Welle erzielt wird. In den nicht vorveröffentlichten Patentanmeldungen DE-A-36 33 435 und DE-A-37 17 516 sind darüber hinaus Bemessungsregeln angegeben, nach denen in Abhängigkeit von den Werkstoffeigenschaften von Rohr und Antriebselementen, insbesondere von deren Elastizitätsmodul und Streckgrenze die geometrischen Bedingungen, z.B. der Rohrinnen- wie -außendurchmesser festzulegen sind, um einen drehfesten, kraftschlüssigen Verbund zwischen den Teilen herzustellen. Es hat sich gezeigt, daß bei der Anwendung derartiger Wellenkonstruktionen insbesondere auf Nockenwellen von Kraftfahrzeugmotoren die nach diesen Bemessungsregeln erforderlichen Abmessungen der Teile aus konstruktiven oder Gewichtsgründen nicht immer zur Verfügung gestellt werden können. Im Interesse einer ohnehin erwünschten weiteren Gewichtsreduzierung kommt auch dem Umstand Bedeutung zu, daß die radial außenliegenden Schichten einer Hohlwelle einer Torsionsbeanspruchung ein höheres Widerstandsmoment entgegensetzen als die inneren.

Aus der DE-A-3 247 636 ist eine Hohlwelle der eingangs genannten Art in Form einer Nockenwelle bekannt, bei der in ein metallisches Rohr ein Kern oder eine Schicht aus Faserverbundwerkstoff in plastischem Zustand eingebracht und unter Druck bei bestehender Umfangszugspannung im metallischen Rohr ausgehärtet wird. Auf das ausgehärtete zweischichtige Rohr werden dann die Nocken nach bekanntem Verfahren thermisch aufgeschrumpft. Das Herstellungsverfahren hierfür ist außerordentlich kompliziert. Nachteilig ist darüber hinaus ein unterschiedliches Temperaturverhalten der beiden Werkstoffe, die zu einer Beeinflussung des Preßsitzes der Nocken in Abhängigkeit von der Temperatur führt.

Aufgabe der vorliegenden Erfindung ist eine Verbesserung der eingangs erwähnten Antriebswelle dahingehend, daß eine ausreichend sichere Befestigung der Antriebselemente auf derselben auch dann erreicht werden kann, wenn die möglichen Abmessungen der Welle und der Antriebselemente eine Einhaltung der genannten Bemessungsregeln nicht gestatten. Darüber hinaus soll eine optimale Ausnutzung der Festigkeitseigenschaften der verwendeten Werkstoffe im Hinblick auf Torsions- und Biegebeanspruchungen gegeben sein. Gegenüber der gattungsgemäßen Hohlwelle nach der DE-A-3 247 636 soll die Herstellbarkeit bei ebenfalls hoher Festigkeit vereinfacht sein.

Die Lösung dieser Aufgabe erfolgt dadurch, daß die äußere Schicht aus einem Werkstoff höherer Festigkeit, nämlich aus hochfestem Stahl, und die innere Schicht aus einem Werkstoff geringerer Festigkeit, nämlich aus Aluminium oder Titan oder geringerwertigem Stahl besteht. In den meisten Anwendungsfällen wird ein Aufbau aus zwei Schichten ausreichend sein, doch erscheinen für manche Zwecke auch mehr als zwei Schichten denkbar.

Um eine sichere Haftung der Antriebselemente auf der Welle zu erzielen, ist es erforderlich, eine plastische Verformung der letzteren über einen bestimmten Mindestweg vorzunehmen; sowohl aus diesem Gesichtspunkt als auch aus demjenigen einer optimalen Ausnutzung der Widerstandsmomente ist die erfindungsgemäße Ausgestaltung vorteilhaft, die bei Berücksichtigung aller sonst an Antriebswellen zu stellenden Forderungen die besten Ergebnisse sicherstellt.

Nach einer ersten Ausgestaltung der Erfindung wird die Welle durch Aufschrumpfen der äußeren Schichten auf die inneren hergestellt, so daß in diesen Vorspannungen induziert werden, die beim späteren Aufweiten der die Antriebselemente tragenden Wellenabschnitte zunächst abgebaut werden müssen. Dies kann von Vorteil sein, wenn der erforderliche Dehnweg sonst zum Aufbau unzulässig hoher Spannungen in der Welle führen würde.

Alternativ hierzu wird nach einer anderen Ausgestaltung vorgeschlagen, die inneren Schichten plastisch in die jeweils äußeren aufzuweiten, sei es in einem unabhängigen Arbeitsgang oder aber im Zuge der Aufweitung der Welle zur Befestigung der Antriebselemente.

Gemäß einer weiterführenden Ausgestaltung wird für den Aufbau von Antriebswellen der eingangs beschriebenen Art, bei der die Hohlwelle nur abschnittsweise im Bereich der zu befestigenden Elemente aufgeweitet wird, vorgeschlagen, daß sämtliche Schichten der Hohlwelle plastisch, und nur die Antriebselemente selbst lediglich im elastischen Bereich aufgeweitet werden.

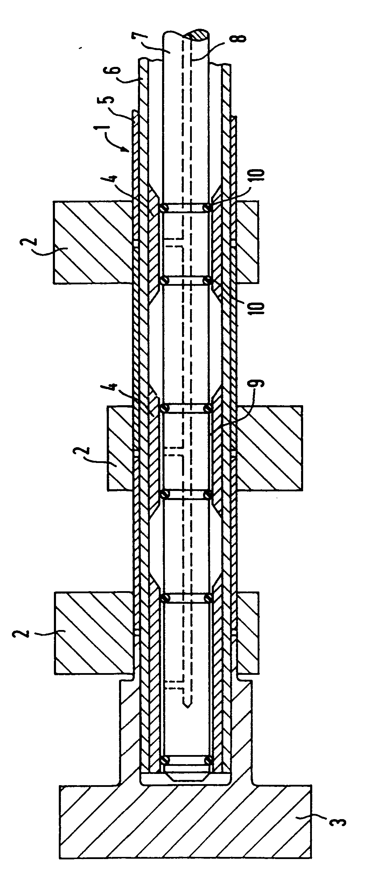

Ein Ausführungsbeispiel der Erfindung ist in der Zeichnung dargestellt, und zwar zeigt diese einen Abschnitt der Nockenwelle im Längsaxialschnitt. Auf einer Hohlwelle 1 werden Nocken 2 und ein Endflansch 3 befestigt, indem erstere von innen in denjenigen Bereichen aufgeweitet wird, die außen von den Antriebselementen (hier Nocken 2 und Endflansch 3) eingenommen werden. Die Hohlwelle 1 kann zur Gewichtsersparnis aus einer äußeren, aus einem Werkstoff höherer Festigkeit, z.B. aus Stahl hergestellten Schicht 5 und einer inneren, aus einem Werkstoff niedrigerer Festigkeit, z.B. aus Aluminium hergestellten Schicht 6 bestehen. Die äußere Schicht 5 kann dann von ihrer Festigkeit und ihrer Oberfläche so beschaffen sein, daß sie ohne weitere Bearbeitung als ein Partner in hier nicht gezeigten Gleit- oder Wälzlagern eingesetzt werden kann. Die Befestigung der Nocken 2 und des Endflansches 3 erfolgt vorzugsweise in einem Arbeitsgang mittels einer in die Hohlwelle eingeführten hydraulischen Drucksonde 7, in deren Innerem über einen mit Abzweigungen versehenen Kanal 8 Druckfluid Aufweitbereichen 9 zugeführt werden kann, die axial durch Ringdichtungen 10 begrenzt werden. Dabei werden die entsprechenden Bereiche der Hohlwelle 1 plastisch, die Nocken 2 und der Endflansch 3 jedoch nur im elastischen Bereich verformt, so daß sie nach Beendigung des Aufweitvorganges zurückfedern und so einen festen, kraftschlüssigen Verbund zwischen den Teilen schaffen. Erlauben die Abmessungen der Teile und deren Werkstoffeigenschaften eine ausreichende Dehnung nicht, so können Stützringe 4 vorgesehen werden, wobei dann zumindest diese plastisch verformt werden. Die Schichten 5, 6 der Hohlwelle 1 können ebenso wie die Antriebselemente 2, 3 nur elastisch, zumindest einzelne jedoch auch plastisch, verformt werden.

## Patentansprüche

1. Hohlwelle (1) mit auf diese aufgeschobenen und darauf befestigten Antriebselementen (2, 3), die aus mindestens zwei konzentrischen Schichten (5, 6) besteht,
dadurch gekennzeichnet,
daß die äußere Schicht (5) aus einem Werkstoff höherer Festigkeit, nämlich aus hochfestem Stahl, und die innere Schicht aus einem Werkstoff geringerer Festigkeit, nämlich aus Aluminium oder Titan oder geringerwertigem Stahl besteht.

2. Hohlwelle nach Anspruch 1,
dadurch gekennzeichnet,
daß die äußere Schicht (5) auf die innere (6) aufgeschrumpft ist.

3. Hohlwelle nach Anspruch 1,
dadurch gekennzeichnet,
daß die innere Schicht (6) plastisch in die äußere Schicht (5) aufgeweitet ist.

4. Hohlwelle nach Anspruch 3 mit durch abschnittsweises Aufweiten derselben darauf befestigten Antriebselementen (2, 3),
dadurch gekennzeichnet,
daß innere (6) und äußere Schicht (5) plastisch in die elastisch aufgeweiteten Antriebselemente (2, 3) verformt sind.

## Claims

1. A hollow shaft (1) having drive elements (2,3) slid thereon and secured thereto, and consisting of at least two concentric layers (5,6),
characterised in
that the outer layer (5) consists of a higher strength material, that is high-tensile steel, and the inner layer of a lower strength material, that is aluminium or titanium or a lower grade steel.

2. A hollow shaft according to claim 1,
characterised in
that the outer layer (5) is shrunk on to the inner layer (6).

3. A hollow shaft according to claim 1,
characterised in
that the inner layer (6) is plastically expanded into the outer layer (5).

4. A hollow shaft according to claim 3, having drive elements (2,3) secured to the shaft by expanding it in portions,
characterised in
that the inner layer (6) and outer layer (6) are plastically deformed into the elastically expanded drive elements (2,3).

## Revendications

1. Arbre creux (1) sur lequel sont enfilés et fixés des éléments d'entraînement (2, 3), qui consiste en au moins deux couches concentriques (5, 6),
caractérisé en ce que
la couche externe (5) consiste en un matériau de plus grande résistance mécanique, à savoir en acier à haute résistance, et en ce que la couche interne consiste en un matériau de plus faible résistance mécanique, à savoir en aluminium ou titane ou en acier de moindre valeur.

2. Arbre creux selon la revendication 1,
caractérisé en ce que
la couche externe (5) est emmanchée par frettage sur la couche interne (6).

3. Arbre creux selon la revendication 1,
caractérisé en ce que
la couche interne (6) est élargie plastiquement dans la couche externe (5).

4. Arbre creux selon la revendication 3, sur lequel sont fixés des éléments d'entraînement (2, 3) par élargissement de l'arbre creux sur des segments,
caractérisé en ce que
la couche interne (6) et la couche externe (5) sont déformées plastiquement dans les éléments d'entraînement (2, 3) élargis élastiquement.